# EUROPÄISCHE PATENTSCHRIFT

(11) **EP 0 375 052 B1**
(45) Veröffentlichungstag und Bekanntmachung des Hinweises auf die Patenterteilung: **18.09.1996**
(21) Anmeldenummer: 89203220.2
(22) Anmeldetag: 18.12.1989
(51) Int. Cl.: H04Q 7/20, H04B 7/26

(54) **Gerät der Nachrichtentechnik**
Communication device
Dispositif de communication

(30) Priorität: 22.12.1988 DE 3843181
(43) Veröffentlichungstag der Anmeldung: 27.06.1990
(73) Patentinhaber: Philips Patentverwaltung GmbH, 22335 Hamburg (DE); Philips Electronics N.V., 5621 BA Eindhoven (NL)
(72) Erfinder: Dennerlein, Ludwig, D-8501 Eckental 1 (DE); Weber, Hubert, Dipl.-Ing. (FH), D-8501 Kalchreuth (DE)
(74) Vertreter: Peuckert, Hermann, Dipl.-Ing.

(56) Entgegenhaltungen:
- EP-A- 0 176 818
- EP-A- 0 182 982
- EP-A- 0 186 229
- PATENT ABSTRACTS OF JAPAN, Band 10, Nr. 370 (E-463), 10. Dezember 1986; & JP-A-61 167 238 (NEC) 28-07-1986

## Beschreibung

Die Erfindung betrifft ein Gerät der Nachrichtentechnik, insbesondere ein bewegliches Funksendeempfangsgerät mit einer Steuereinrichtung und mit einer Verzögerungseinrichtung zum Aussenden einer zeitversetzten Quittungsmeldung zu einer empfangenen Nachricht.

Die Erfindung betrifft weiter ein Funkübertragungssystem mit einem derartigen Gerät.

In einem Mobilfunksystem, wie z.B. dem C-Netz der Deutschen Bundespost, ist der Funkversorgungsbereich räumlich und organisatorisch in Funkzellen gegliedert. Eine, im allgemeinen in der Mitte einer solchen Funkzelle befindliche, Funkfeststation führt den Funkverkehr mit allen in dieser Funkzelle befindlichen beweglichen Funktelefongeräten durch. Die Zuordnung eines beweglichen Funktelefongerätes zu einer bestimmten Funkzelle kann hierbei über eine Entfernungsmessung erfolgen.

Hierzu sendet jede Funkfeststation, welche die Anforderung eines Gesprächsaufbaus eines beweglichen Funktelefongerätes erhält, eine Aufforderung zur Sendung eines Quittungssignales. Die Zeitspanne, die vom Empfang des Aufforderungssignales bis zum Senden des Quittungssignales vergeht, wird als Antwortzeit bezeichnet. Um vergleichbare Ergebnisse zu erhalten ist die Antwortzeit dem Funktelefongerät fest vorgegeben. Aus der gemessenen Zeitdifferenz zwischen Senden des Aufforderungssignales und Empfangen des Quittungssignales ergibt sich nach Abzug dieser Antwortzeit die Funklaufzeit zwischen Funkfeststation und beweglichem Funktelefongerät. Aus der Funklaufzeit wird die Entfernung zwischen der jeweiligen Funkfeststation und dem beweglichen Funktelefongerät errechnet. Zur Vermeidung einer fehlerhaften Empfangsberechnung muß die Antwortzeit sehr genau eingehalten werden.

Aus EP-A 0 186 229 ist ein digitales Funkübertragungssystem bekannt, bei dem zur Veränderung einer Schutzzeit zwischen zwei Zeitkanälen des Zeitmultiplexrahmens in der beweglichen Funkstation ein von der Entfernung zwischen beweglicher und ortsfester Funkstation abhängiger Vorhalt eingestellt wird.

Aus EP-A 0 176 818 ist ein Oszillator mit Temperaturkomenpensation beschrieben, wobei zur Temperaturkompensation ein Temperatursensor zum Abfühlen einer Umgebungstemperatur und zum Erhalten eines entsprechenden Temperatursignals, Umwandlungsmittel zum Umwandeln des Temperatursignals in ein Digitalsignal sowie eine Steuereinrichtung vorgesehen sind.

Aufgabe der Erfindung ist es, ein Gerät der eingangs genannten Art so auszugestalten, daß es eine vorgebbare Antwortzeit genau einhält.

Diese Aufgabe wird bei einem Gerät der eingangs genannten Art dadurch gelöst, daß die Steuereinrichtung zur Entnahme eines Korrekturwerts aus einem Korrekturwertspeicher zum Ausgleich von temperaturabhängigen Signallaufzeiten mittels eines Temperatursensors und zur Vorgabe dieses Korrekturwertes der Verzögerungseinrichtung zur Festlegung der Verzögerungszeit vorgesehen ist.

Der an die beispielsweise als Mikroprozessor ausgebildete Steuereinrichtung angeschlossene Temperatursensor liefert eine, zur Umgebungstemperatur eines Sendeempfängers des Funktelefongeräts proportionale Spannung, welche von dem in einen digitalen Wert umgesetzt werden kann. Dieser digitale Wert ist Bestandteil einer Adresse, mit welcher ein Speicherplatz des Korrekturwertspeichers angesprochen wird. Der Inhalt des auf diese Weise adressierten Speicherplatzes des Korrekturwertspeichers ist der einem bestimmten Temperaturbereich zugeordnete Korrekturwert. Der Korrekturwert dient dazu, die Aussendung der Quittungsmeldung um eine dem Korrekturwert entsprechende Zeitspanne zu verzögern, so daß die Antwortzeit des Gerätes unabhängig von der Umgebungstemperatur stets konstant gehalten wird. Im Ergebnis sind mit der Verzögerungseinrichtung somit unterschiedliche Verzögerungszeiten erzielbar.

Beispielsweise durch die im Sendeempfangsteil verwendeten Spulen und Filter verursachte, auch geräteindividuell ausgeprägte und temperaturabhängige Signallaufzeiten zwischen Antenneneingang des Empfängers und der Schnittstelle der Steuereinrichtung bzw. von der Steuereinrichtung zum Antennenanschluß während des Sendens könne dadurch kompensiert werden, daß der Korrekturwertspeicher eine Wertetabelle aufweist, die zur Speicherung von Signallaufzeiten im Empfangsteil und/oder im Sendeteil einer Sendeempfangseinheit des Geräts der Nachrichtentechnik bei verschiedenen Umgebungstemperaturen vorgesehen ist.

Damit eine Speicherung der Korrekturwerte überhaupt möglich ist, ist zur Ermittlung der Korrekturwerte eine Abgleichvorrichtung vorgesehen, mit der die Verarbeitungszeiten der Sendeempfangseinheit bei verschiedenen Temperaturen gemessen werden.

Daß bei einem Austausch eines fehlerhaften Empfangsteiles die für dieses Empfangsteil ermittelte Wertetabelle ebenfalls mit ausgetauscht wird, kann dadurch sichergestellt werden, daß sich die temperaturabhängigen Sende- und/oder Empfangsteile der Sendeempfangseinheit des Geräts der Nachrichtentechnik und der Korrekturwertspeicher auf einer gemeinsamen Leiterplatte befinden.

Eine einfache Speicherung der Korrekturwerte und eine einfache Umsetzung der Korrekturwerte in eine Signalverzögerung wird dadurch ermöglicht, daß ein Phasenschieber und/oder ein Zähler vorgesehen ist, der sicherstellt, daß der zum Aussenden des zwischengespeicherten Quittungssignales verwendete Bittakt gegenüber einem freilaufenden Bezugstakt so versetzt wird, daß der zeitlich verschobene Bittakt genau zum Zeitpunkt des Ablaufes der vorgeschriebenen Antwortzeit beginnt.

Weitere vorteilhafte Ausgestaltungsformen sind in den Unteransprüchen enthalten.

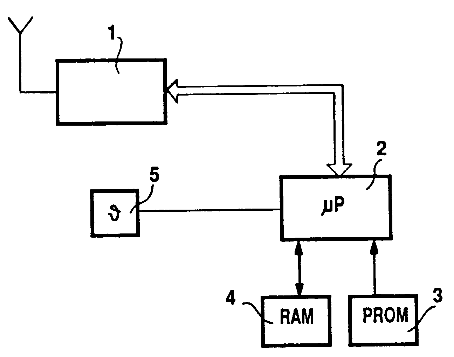

Die Erfindung wird nun anhand eines in der Zeichnung dargestellten Ausführungsbeispieles näher beschrieben und erläutert.

Die Zeichnung zeigt den Sendeempfangsteil 1 eines beweglichen Funktelefongerätes, welches mit einer Signalauswerteeinheit verbunden ist. Die Signalauswerteeinheit besteht im wesentlichen aus einem Mikroprozessor 2, einem Festwertspeicher 3 und einem Schreib-Lese-Speicher 4. Ein Teilbereich des Festwertspeichers 3 enthält ein Betriebsprogramm, mit Hilfe dessen die vom Empfangsteil empfangenen Daten im Schreib-Lese-Speicher 4 zwischengespeichert und im Mikroprozessor 2 verarbeitet werden. So werden z.B. die empfangenen Daten daraufhin untersucht, ob es sich um ein Aufforderungssignal zum Senden eines Quittungssignales handelt. In diesem Fall wird das Quittungssignal gebildet und in einer nicht dargestellten Ausgabeeinheit des Sendeteiles 1 zwischengespeichert.

Es hat sich erwiesen, daß die Signallaufzeit zwischen Antenneneingang des Empfängers und der Schnittstelle zum Mikroprozessor 2 bzw. von der Schnittstelle des Mikroprozessors zum Antennenanschluß während des Sendens temperaturabhängig sind. Diese temperaturabhängigen Signallaufzeiten werden bspw. durch die im Sendeempfangsteil verwendeten Spulen und Filter verursacht und sind darüber hinaus auch geräteindividuell. Aus diesem Grund ist in einem Teilbereich des Festwertspeichers 3 des Funktelefongerätes eine Wertetabelle gespeichert, in welcher die Signallaufzeiten im Empfangsteil sowie im Sendeteil der Sendeempfangseinheit 1 bei verschiedenen Umgebungstemperaturen eingearbeitet sind.

Hierzu werden in einer nicht dargestellten Abgleichvorrichtung die Verarbeitungszeiten jedes Sendeempfängers während seiner Herstellung bei verschiedenen Temperaturen gemessen. Aus diesen Meßergebnissen werden Korrekturwerte berechnet, die zum Ausgleich der temperaturabhängigen Signallaufzeiten dienen. Diese Korrekturwerte werden in geeignet codierter Form im PROM 3 gespeichert. Im Ausführungsbeispiel befinden sich die temperaturabhängigen Empfangsteile des Empfängers und das PROM auf einer gemeinsamen Leiterplatte. Hierdurch ist sichergestellt, daß bei einem Austausch eines fehlerhaften Empfangsteiles die für dieses Empfangsteil ermittelte Wertetabelle ebenfalls mit ausgetauscht wird.

An den Mikroprozessor 2 ist ein Temperatursensor 5 angeschlossen. Dieser Temperatursensor 5 liefert eine, zur Umgebungstemperatur des Sendeempfängers 1 proportionale Spannung, welche von dem Mikroprozessor 2 in einen digitalen Wert umgesetzt wird. Dieser digitale Wert ist Bestandteil einer Adresse, mit welcher ein Speicherplatz des Festwertspeichers 3 angesprochen wird. Der Inhalt des auf diese Weise adressierten Speicherplatzes des Festwertspeichers 3 ist der einem bestimmten Temperaturbereich zugeordnete Korrekturwert. Mittels des aus dem Festwertspeicher 3 ausgelesenen Korrekturwertes wird die Aussendung der Quittungsmeldung um eine dem Korrekturwert entsprechende Zeitspanne verzögert, so daß die Antwortzeit des beschriebenen Gerätes unabhängig von der Umgebungstemperatur auf diese Weise stets konstant gehalten wird.

Beim Ausführungsbeispiel der Erfindung wird das Quittungssignal mit einer Datenbitrate von 5,28 Kbit/sec gesendet. Als Antwortzeit sind 150 Milisekunden mit einer maximal zulässigen Abweichung von 5 Microsekunden vorgegeben. Die zugelassene Abweichung ist somit kleiner als die Zeitdauer eines Datenbits des Quittungssignales. Im Ausführungsbeispiel wird daher der zum Aussenden des zwischengespeicherten Quittungssignales verwendete Bittakt durch einen nicht dargestellten Phasenschieber zeitlich gegenüber einem freilaufenden Bezugstakt so versetzt, daß der zeitlich verschobene Bittakt genau zum Zeitpunkt des Ablaufes der vorgeschriebenen Antwortzeit beginnt. Die maximal mögliche zeitliche Versetzung des Bittaktes beträgt hierbei eine halbe Bitbreite des Quittungssignales. Da diese Zeitspanne größer ist als die bei den im Ausführungsbeispiel verwendeten Empfangsteil auftretenden Signallaufzeitdifferenzen, kann auf diese Weise durch eine Phasenverschiebung über den Bereich eines Taktes des Bittaktes jede auftretende Signallaufzeit ausgeglichen werden.

Im Ausführungsbeispiel wird als Phasenschieber ein rückwärts zählender Modulo-256-Zähler mit vorgebbarem Anfangswert verwendet. Dem Takteingang des Zählers ist als Bezugstakt die 256fache Taktfrequenz des Quittungssignales zugeführt. Der an einen Übertragungausgang des Zählers durch 256 geteilte abgreifbare Bezugstakt ist als Bittakt der Ausgabeeinheit des Sendeteiles 1 zugeführt.

Einem Vorbesetzungseingang des Zählers ist der ausgelesene Korrekturwert der Wertetabelle zugeführt. Mittels eines vom Mikroprozessor erzeugten Übernahmeimpulses wird der an den Vorbesetzungseingängen anliegende Korrekturwert vom Zähler als aktueller Zeitbestand übernommen. Mit jedem Taktsignal des Bezugstaktes wird der Zählerstand des Zählers erniedrigt, bis der Zählerstand des Zählers den Wert Null erreicht hat. Beim Erreichen des Zählerstandes Null wechselt der Zähler an seinem Übertragsausgang seinen Signalzustand. Dies ist der Beginn des ersten Taktes des Quittungssignales. Im Ausführungsbeispiel wird auf diese Weise die zum Ausgleich der Signallaufzeiten benötigte Zeitspanne mittelbar als Anzahl des in dieser Zeitspanne verstreichenden Bezugstaktes gespeichert. Dies ermöglicht eine einfache Speicherung der Korrekturwerte und eine einfache Umsetzung der Korrekturwerte in eine Signalverzögerung.

In einer nicht dargestellten Ausführungsform der Erfindung, die Anwendungszwecke betrifft, bei denen die Zeitdauer eines Datensignaltaktes größer ist als die zu verzögernde Zeitspanne kann anstelle der Phasenverschiebung des Eingangstaktes der Eingangstakt selbst um eine entsprechend benötigte Anzahl von Taktschritten verzögert werden.

## Patentansprüche

1. Gerät der Nachrichtentechnik mit einer Steuereinrichtung (2) und mit einer Verzögerungseinrichtung zum Aussenden einer zeitversetzten Quittungsmeldung zu einer empfangenen Nachricht,
dadurch gekennzeichnet.
daß die Steuereinrichtung (2) zur Entnahme eines Korrekturwerts zum Ausgleich von temperaturabhängigen Signallaufzeiten aus einem Korrekturwertspeicher (3) mittels eines Temperatursensors (5) und zur Vorgabe dieses Korrekturwertes der Verzögerungseinrichtung zur Festlegung der Verzögerungszeit vorgesehen ist.

2. Gerät der Nachrichtentechnik nach Anspruch 1,
dadurch gekennzeichnet,
daß der Korrekturwertspeicher (3) eine Wertetabelle aufweist, die zur Speicherung von Signallaufzeiten im Empfangsteil und/oder im Sendeteil einer Sendeempfangseinheit (1) des Geräts der Nachrichtentechnik bei verschiedenen Umgebungstemperaturen vorgesehen ist.

3. Gerät der Nachrichtentechnik nach einem der Ansprüche 1 oder 2,
dadurch gekennzeichnet,
daß zur Ermittlung der Korrekturwerte eine Abgleichvorrichtung vorgesehen ist, mit der die Verarbeitungszeiten der Sendeempfangseinheit (1) bei verschiedenen Temperaturen gemessen werden.

4. Gerät der Nachrichtentechnik nach einem der Ansprüche 1 bis 3,
dadurch gekennzeichnet,
daß sich die temperaturabhängigen Sende- und/oder Empfangsteile der Sendeempfangseinheit (1) des Geräts der Nachrichtentechnik und der Korrekturwertspeicher (3) auf einer gemeinsamen Leiterplatte befinden.

5. Gerät der Nachrichtentechnik nach einem der Ansprüche 1 bis 4,
dadurch gekennzeichnet,
daß zur Ablage der Korrekturwerte im Korrekturwertspeicher (3) adressierbare Speicherzellen vorgesehen sind und daß Umwandlungsmittel zur Umwandlung der Ausgangswerte des Temperatursensors (5) in eine binäre Darstellung zur Adressierung des Korrekturwertspeichers (3) vorgesehen sind.

6. Gerät der Nachrichtentechnik nach einem der Ansprüche 1 bis 5,
dadurch gekennzeichnet,
daß der Korrekturwert einem Phasenschieber oder einem Zähler zugeführt ist.

7. Gerät der Nachrichtentechnik nach einem der Ansprüche 1 bis 6,
dadurch gekennzeichnet,
daß der Phasenschieber und/oder der Zähler sicherstellt, daß der zum Aussenden des zwischengespeicherten Quittungssignales verwendete Bittakt gegenüber einem freilaufenden Bezugstakt so versetzt wird, daß der zeitlich verschobene Bittakt genau zum Zeitpunkt des Ablaufes der vorgeschriebenen Antwortzeit beginnt.

8. Gerät der Nachrichtentechnik nach einem der Ansprüche 1 bis 7,
dadurch gekennzeichnet,
daß zur Aussendung der Quittungsmeldung ein Taktsignal vorgesehen ist und daß das Gerät Mittel zur Verschiebung der Phasenlage des Taktsignals entsprechend dem Korrekturwert aufweist.

9. Gerät der Nachrichtentechnik nach einem der Ansprüche 1 bis 8,
dadurch gekennzeichnet,
daß ein zur Aussendung der Quittungsmeldung verwendetes Taktsignal um eine dem Korrekturwert entsprechende Anzahl von Taktintervallen unterdrückt wird.

10. Gerät der Nachrichtentechnik nach einem der Ansprüche 1 bis 9,
dadurch gekennzeichnet,
daß das Gerät der Nachrichtentechnik ein bewegliches Funksendeempfangsgerät ist.

11. Funkübertragungssystem mit mindestens einer Funkfeststation und mit mindestens einem Gerät der Nachrichtentechnik nach einem der Ansprüche 1 bis 10.

## Claims

1. Communication device comprising a control unit (2) and a delay unit, for transmitting an acknowledge signal shifted in time relative to a received message, characterized in that the control unit (2) takes a correction value from a correction value memory (3) to compensate for temperature-dependent signal delays by means of a temperature sensor (5) and defines this correction value of the delay unit to set the delay.

2. Communication device as claimed in Claim 1, characterised in that the correction value memory (3) contains a Table of values used for storing signal delays in the receiving section and/or in the sending section of a transceiver unit (1) of the communication device for various ambient temperatures.

3. Communication device as claimed in one of the Claims 1 or 2, characterised in that a compensation unit measuring the processing times of the transceiver unit (1) at different temperatures is provided to determine the correction values.

4. Communication device as claimed in one of the Claims 1 to 3, characterised in that the temperature-dependent sending and/or receiving section of the transceiver unit (1) of the communication device as well as the correction value memory (3) are located on a common printed circuit board.

5. Communication device as claimed in one of the Claims 1 to 4, characterised in that addressable memory locations are provided in the correction value memory (3) for storing the correction values and in that converter means are provided for converting the output values of the temperature sensor (5) into a binary representation to address the correction value memory (3).

6. Communication device as claimed in one of the Claims 1 to 5, characterised in that the correction value is applied to a phase shifter or to a counter.

7. Communication device as claimed in one of the Claims 1 to 6, characterised in that the phase shifter and/or the counter ensures that the bit clock used for sending the buffered acknowledge signal as against a free running reference clock is shifted so that the time shifted bit clock starts exactly at the instant when the prescribed response time stops.

8. Communication device as claimed in one of the Claims 1 to 7, characterised in that a clock signal is used for the transmission of the acknowledge signal and in that the device comprises means for shifting the phase condition of the clock signal in accordance with the correction value.

9. Communication device as claimed in one of the Claims 1 to 8, characterised in that a clock signal used for the transmission of the acknowledge signal is suppressed by a number of clock intervals corresponding to the correction value.

10. Communication device as claimed in one of the Claims 1 to 9, characterised in that the communication device is a mobile radio transceiver.

11. Radio transmission system comprising at least one radio base station and at least one communication device as claimed in one of the Claims 1 to 10.

## Revendications

1. Appareil de communication avec un dispositif de commande (2) et un dispositif retardateur pour l'émission d'un accusé de réception différé à un message reçu, caractérisé en ce que le dispositif de commande (2) est prévu pour le prélèvement d'une valeur de correction en vue de la compensation du temps de propagation du signal dépendant de la température à partir d'une mémoire de valeurs de correction (3) à l'aide d'une sonde de température (5) et pour la détermination de cette valeur de correction du dispositif retardateur en vue de fixer le temps du retard.

2. Appareil de communication selon la revendication 1, caractérisé en ce que la mémoire de valeurs de correction (3) présente un tableau de valeurs qui est prévu pour la sauvegarde des temps de propagation du signal dans la partie réceptrice et/ou dans la partie émettrice d'une unité émettrice/réceptrice (1) de l'appareil de communication à différentes températures ambiantes.

3. Appareil de communication selon l'une des revendications 1 ou 2, caractérisé en ce que, pour la détermination des valeurs de correction, il est prévu un dispositif d'égalisation avec lequel les temps de traitement de l'unité émettrice-réceptrice (1) sont mesurés à différentes températures.

4. Appareil de communication selon l'une des revendications 1 à 3, caractérisé en ce que les parties émettrice et/ou réceptrice dépendant de la température de l'unité émettrice/réceptrice (1) de l'appareil de communication et la mémoire de valeurs de correction (3) se trouvent sur une carte à circuits imprimés commune.

5. Appareil de communication selon l'une des revendications 1 à 4, caractérisé en ce que des cellules de mémoire adressables sont prévues pour la sauvegarde des valeurs de correction dans la mémoire de valeurs de correction (3) et que des moyens de conversion sont prévus pour la conversion des valeurs de départ de la sonde de température (5) dans une représentation binaire pour l'adressage de la mémoire de valeurs de correction (3).

6. Appareil de communication selon l'une des revendications 1 à 5, caractérisé en ce que la valeur de correction est amenée à un déphaseur ou à un compteur.

7. Appareil de communication selon l'une des revendications 1 à 6, caractérisé en ce que le déphaseur et/ou le compteur garantit que le rythme binaire utilisé pour l'émission d'un signal d'accusé de réception sauvé à titre intermédiaire est décalé par rapport à un rythme de référence spontané de telle sorte que le rythme binaire décalé temporellement commence précisément au moment de l'expiration du temps de réponse prescrit.

8. Appareil de communication selon l'une des revendications 1 à 7, caractérisé en ce qu'un signal de rythme est prévu pour l'émission de l'accusé de réception et que l'appareil présente des moyens pour le décalage de la position de phase du signal de rythme en fonction de la valeur de correction.

9. Appareil de communication selon l'une des revendications 1 à 8, caractérisé en ce qu'un signal de rythme utilisé pour l'émission de l'accusé de réception est réduit d'un nombre d'intervalles de rythme correspondant à la valeur de correction.

10. Appareil de communication selon l'une des revendications 1 à 9, caractérisé en ce que l'appareil de communication est un émetteur-récepteur radio mobile.

11. Système de transmission radio avec au moins une station radio et au moins un appareil de communication selon l'une des revendications 1 à 10.
